# EUROPEAN PATENT SPECIFICATION

(11) **EP 2 300 309 B1**
(45) Date of publication and mention of the grant of the patent: **20.04.2016**
(21) Application number: 09750095.3
(22) Date of filing: 22.05.2009
(51) Int. Cl.: F03B 17/06, B63B 21/50

(54) **WATER CURRENT POWERED GENERATING APPARATUS**
VORRICHTUNG ZUR ENERGIEERZEUGUNG AUS WASSERSTRÖMUNG
APPAREIL DE GÉNÉRATION D'ÉNERGIE ACTIONNÉ PAR UN COURANT D'EAU

(30) Priority: 22.05.2008 GB 0809334
(43) Date of publication of application: 30.03.2011
(73) Proprietor: Scotrenewables Tidal Power Limited, Orkney KW15 1ZL (GB)
(72) Inventor: JOHNSTON, Barry, Orkney KW16 3HS (GB); HAMILTON, Mark, Orkney KW15 1ZL (GB); ANNAL, William, Orkney KW15 1TX (GB); SPENCE, Robert, Orkney KW15 1 PR (GB)
(74) Representative: Flaherty, Annette Esther
(86) International application number: PCT/GB2009/001280
(87) International publication number: WO 2009/141617

(56) References cited:
- WO-A1-87/05876
- WO-A1-2006/061652
- WO-A1-2008/149132
- AU-A4- 2001 100 291
- CA-C- 1 290 221
- US-A- 4 428 712
- US-A1- 2007 231 072
- US-A1- 2007 284 882

## Description

### Field of the invention

The present invention relates to power generating apparatus and in particular but not exclusively to water powered electricity generating apparatus.

### Background to the invention

Water current or wave powered generating apparatus is known. WO 2006/061652 describes a water current powered generating apparatus comprising a buoyancy vessel from which rotors depend. When in use the water current powered generating apparatus is moored by means of cables anchored to the seabed. The rotors are driven by the water currents with the rotors in turn driving an electrical generator contained in the buoyancy vessel to thereby provide a three-phase electricity supply. Typically the electricity supply is conveyed by means of an electrical cable to a junction box on the seabed, with the junction box being connected in turn to the electricity supply system.

Document CA-1290221 shows a prior art device according to the preamble of claim 1.

The water powered generating apparatus comprises electrical, electromechanical and mechanical components that require maintenance from time to time. Accordingly, it is necessary to recover the water powered generating apparatus from its operating location for transport to a harbour-side maintenance facility or a floating maintenance facility. Recovery of the water powered generating apparatus can involve disconnection from mooring cables and the electrical cable and towing to the on-shore maintenance facility. Disconnection can involve the use of divers working underwater. Alternatively, the water powered generating apparatus may be lifted bodily out of the seawater, with or without disconnection from the cable and mooring lines, onto the floating maintenance facility where access can be gained to component parts that, in use, are underwater.

The present inventor has appreciated known water powered generating apparatus to have shortcomings. Accordingly, it is an aim for the present invention to provide an improved power generating apparatus.

### Statement of invention

According to a first aspect of the present invention there is provided power generating apparatus comprising:
a first arrangement comprising a first buoyancy vessel configured to float at a surface of a body of water, the first arrangement comprising at least one energy conversion apparatus operable to be driven by the environment; and
a second arrangement permanently moored to the bed of the body of water, the second arrangement comprising: a second buoyancy vessel configured to be neutrally buoyant at a location in the body of water spaced apart from the bed of the body of water; and an electrical cable,
the first and second arrangements being configured for releasable attachment to each other and such that electricity is conveyed through the electrical cable in dependence upon operation of the energy conversion apparatus when the first and second arrangements are attached to each other.

When the power generating apparatus is in use the first and second arrangements are attached to each other. Operation of the energy conversion apparatus causes electricity to be conveyed through the electrical cable, e.g. to a junction box on the seabed. Hence, the electrical cable may be operative to convey electricity generated by the energy conversion apparatus from the first arrangement. When it is desired to carry out maintenance on the power generating apparatus the first and second arrangements are detached from each other. This provides for ease of disconnection of the first arrangement from its operating location for maintenance operations, which may, for example, involve either towing to an on-shore harbour-side maintenance facility or mooring at a floating maintenance facility. Such a disconnection operation can be accomplished more readily and quickly compared, for example, with the known approaches described above. The second arrangement may be configured to be neutrally buoyant at a location in the body of water spaced apart from the surface of the body of water and from the bed of the body of water.

More specifically, the first arrangement may be of a volume substantially fifty times greater than a volume of the second arrangement.

Alternatively or in addition, the first arrangement may have a weight substantially fifty times greater than a volume of the second arrangement.

Alternatively or in addition, the energy conversion apparatus may comprise a power generator that is driven by the environment.

More specifically, the power generator may be configured to be driven by movement of the body of water in which the first arrangement floats. For example, the power generating apparatus may be water current powered generating apparatus of the kind described in WO 2006/061652 or CA-1290221

Alternatively or in addition, the energy conversion device may comprise an electromechanical generator.

Alternatively or in addition, the power generating apparatus may be configured for use in a body of seawater.

Alternatively or in addition, the electric cable may be attached at a first end to the second arrangement and may be attached at a second, opposing end to an electrical connector, such as a cable junction box, in the body of water. The electrical connector may be disposed on the bed of the body of water. The power generating apparatus may be configured such that the electrical cable is the sole means of conveyance between the first arrangement and the second arrangement, i.e. the power generating apparatus may lack means to convey fluids between the first arrangement and the second arrangement.

Alternatively or in addition, the second buoyancy vessel may be configured to be neutrally buoyant at a predetermined depth in the body of water. Thus, when the first and second arrangements are detached from each other the second buoyancy vessel can sink in the body of water to the predetermined depth where it presents no obstacle to shipping and such that its location is known for later recovery.

More specifically, the predetermined depth may be at least substantially 5 m.

More specifically, the predetermined depth may be at least substantially 10 m.

More specifically, the predetermined depth may be between substantially 15 m and substantially 20 m.

Alternatively or in addition, the second buoyancy vessel may define at least one air tight space.

More specifically, the second buoyancy vessel may define an annular air tight space.

Alternatively or in addition, the second buoyancy vessel may be frustroconical in form.

Alternatively or in addition, the second buoyancy vessel may be an equilateral polygon in cross-section.

Alternatively or in addition, the second buoyancy vessel may define a bore extending therethrough.

More specifically, the electrical cable may be received in the bore.

More specifically, the electrical cable may be attached to the second buoyancy vessel towards an end of the bore at an end of the second buoyancy vessel furthest from the bed of the body of water when the power generating apparatus is in use.

Alternatively or in addition, the electrical cable may be releasably attached to the second buoyancy vessel. Thus, for example, when the first arrangement is moored alongside a floating maintenance facility and the first and second arrangements are attached to each other, the electrical cable may be released from the second arrangement and moved on board the maintenance facility for maintenance work to be carried out in a dry environment.

In addition, detachment of the electrical cable from the second buoyancy vessel can provide for ease of access to the electrical cable. More, specifically, access can be gained to the electrical cable for maintenance purposes without having, for example, to remove a part of the power generating apparatus from the water or send persons into the water or onto the first arrangement to gain access to the electrical cable and without having to disconnect mooring lines from the second arrangement. During an electrical cable maintenance procedure, the electrical cable can be lifted onto a floating maintenance facility. Thus, a comparatively small capacity floating maintenance facility can be used for maintenance of the electrical cable.

Alternatively or in addition, the second arrangement may comprise a mechanical connector and an electrical connector, the mechanical connector providing a mechanical connection between the electrical cable and the second arrangement, the electrical connector providing for an electrical connection between the first arrangement and the second arrangement.

More specifically, the mechanical connector and the electrical connector may be configured for their connection and disconnection at different times. Thus, where the first and second buoyancy vessels are being disconnected the electrical connector may be disconnected first and the mechanical connector disconnected second. Also, where the first and second buoyancy vessels are being connected the mechanical connector may be connected first and the electrical connector connected second.

Alternatively or in addition, the second arrangement may comprise an energy conversion apparatus electrical connector configured to provide for an electrical connection with the energy conversion apparatus. More specifically, the energy conversion apparatus electrical connector may be electrically coupled to the electrical cable.

More specifically, where the energy conversion apparatus comprises an electromechanical generator the energy conversion apparatus electrical connector may be configured to allow for relative rotation of the first arrangement and part of the second arrangement. Thus, the energy conversion apparatus electrical connector may be a slip ring electrical connector, which provides for 360 deg rotation of the first buoyancy vessel relative to part of the second buoyancy vessel.

Alternatively or in addition, the energy conversion apparatus electrical connector may be attached to an exterior surface of the second arrangement disposed furthest from the bed of the body of water. More specifically, where the second arrangement has a bore in which the electrical cable is received the energy conversion apparatus electrical connector may be disposed coaxially with the bore.

Alternatively or in addition, the energy conversion apparatus electrical connector may be detachable from the second arrangement. Thus, the energy conversion apparatus electrical connector may be detached from the second arrangement for ease of maintenance, for example, in a dry location.

Alternatively or in addition, the second arrangement may comprise a buoy configured to float on the surface of the body of water, the buoy being attached to the second buoyancy vessel by means of a pliable member, such as a rope line. Thus, where the second buoyancy vessel is configured to be neutrally buoyant at predetermined depth in the body of water the buoy floats on the water surface and can be used for recovery of the second buoyancy vessel from its predetermined depth.

More specifically, the buoy may be releasably attached to the second buoyancy vessel. More specifically, the buoy may be released from the second buoyancy vessel by means of an acoustically actuated release device. Thus, the release device may be actuated acoustically from the surface when it is desired to recover the second buoyancy vessel so that the buoy floats to the surface of the body of water.

Alternatively or in addition, the first buoyancy vessel may be configured to attach to the second arrangement such that the second arrangement is within a footprint of the first buoyancy vessel.

More specifically, the first buoyancy vessel may define a space, the space being configured to receive the second arrangement when the first and second arrangements are attached to each other.

More specifically, the space and the second arrangement may have corresponding surface profiles. Thus, where the second arrangement is of frustroconical form a narrower end of the second arrangement may be received first in the space. This can ease reception and location of the second arrangement in the space defined by the first buoyancy vessel.

Alternatively or in addition, the first and second arrangements may be configured for their remote detachment.

More specifically, the first and second arrangements may be detached by means of a release device that is actuated in dependence on an actuation signal, such as a wireless control signal.

Alternatively or in addition, the first arrangement and part of the second arrangement may be configured for their relative rotation when the first arrangement and the second arrangement are attached. Thus, the first arrangement can move on the tide and waves in relation to part of the second arrangement, which is moored to the bed of the body of water.

More specifically, the first arrangement may comprise second arrangement attachment apparatus which is operable to grip the second arrangement.

More specifically, the second arrangement attachment apparatus comprises a pair of members that move between a first spaced apart disposition in which they do not engage with the second arrangement and a second disposition in which they define a profile between them that engages with the second arrangement.

Alternatively or in addition, the first and second arrangements may be configured for attachment of the second arrangement to the first arrangement at a location spaced apart generally along a direction of the surface of the body of water from an end of the first arrangement.

Alternatively or in addition, the first buoyancy vessel may comprise a plurality of buoyancy vessels.

Alternatively or in addition, the second arrangement may comprise at least one releasable connector for connecting to a mooring line. For example, the second arrangement may comprise four releasable connectors disposed at spaced apart locations for connecting to a respective mooring line. More specifically, the at least one releasable connector may be configured to disconnect from a mooring line by means of a remotely, e.g. acoustically, actuated release device. Thus, the second arrangement can be readily disconnected from the mooring lines and the second arrangement taken on board a maintenance vessel without a diver having to disconnect the mooring lines underwater.

In certain embodiments, the power generating apparatus may comprise a mooring arrangement configured to secure the apparatus to the seabed or other such fixed point.

More specifically, the mooring arrangement may comprise a pliable elongate member, such as a cable or chain, for coupling the apparatus to the seabed or other such fixed point.

More specifically, the mooring arrangement may comprise a length adjuster operable to change a length of elongate member deployed in the water. The length adjuster may comprise a device, such as a reel, operable to lengthen or shorten an effective length of elongate member. The inventor has appreciated that as a cable becomes more taut as the buoyancy vessel rides on a strong tide, the cable becomes stiffer. A stiffer cable can adversely affect the behaviour of the buoyancy vessel in the water. Therefore, having the capability to adjust the length of the elongate member provides a means to address this problem.

More specifically, the mooring arrangement may comprise a tension sensor operative to sense tension in the elongate member. The tension sensor may comprise a strain sensor, such as a load cell, disposed on the elongate member. More specifically, the length adjuster may be operative in dependence on the output from the tension sensor. Thus, as an increase in tension is sensed in the elongate member an effective length of the elongate member may be increased.

Alternatively or in addition, the mooring arrangement may comprise a continuous length of cable engaging with each of two lugs (e.g. through eyes formed in the lugs) of the apparatus such that the length of cable may move in relation to the lugs.

More specifically, the mooring arrangement may comprise a brake configured to prevent movement of the cable in relation to the lugs and to selectively allow movement of the cable in relation to the lugs. Thus, a length of cable depending from each lug may be changed.

More specifically and where the mooring arrangement comprises a tension sensor, the brake may be operative in dependence upon an output from the tension sensor.

Alternatively or in addition, the first arrangement may comprise a retractor mounted thereon and a retractor elongate member, the retractor being operative to retract the retractor elongate member towards the first arrangement. More specifically, the retractor may comprise a winch.

Alternatively or in addition, the retractor may be remotely operable, e.g. from the surface vessel.

Alternatively or in addition, the retractor may be removably attached to the first arrangement. Hence, the retractor may be removed from the first attachment after use, e.g. for use elsewhere.

Alternatively or in addition and where the first buoyancy vessel defines a space for receiving the second arrangement, the retractor may be mounted on the first arrangement such that the retractor elongate member is withdrawn through the space. Hence where an end of the retractor elongate member is attached to the second arrangement, e.g. by way of a rope line supporting a surface buoy, the retractor may be used to draw the second arrangement into the space.

According to a second aspect of the present invention, there is provided a method of detaching power generating apparatus from mooring apparatus, the method comprising the steps of:
moving an arrangement of the power generating apparatus to a surface vessel, the arrangement being permanently moored to the bed of the body of water by mooring apparatus, the arrangement comprising a buoyancy vessel configured to be neutrally buoyant at a location in the body of water spaced apart from the bed of the body of water and the mooring apparatus being releasably attached to the buoyancy vessel;
detaching the mooring apparatus from the buoyancy vessel; and
moving the detached mooring apparatus onto the surface vessel.

More specifically, the method may further comprise performing at least one maintenance task on the mooring apparatus whilst on the surface vessel.

The arrangement may be moved alongside the surface vessel before the mooring apparatus is detached. In use, the method allows for access to be gained to the mooring apparatus for maintenance purposes, e.g. in a dry environment, without having to remove the arrangement from the water. Hence, a comparatively small surface vessel may be used for performing maintenance tasks.

Alternatively or in addition, the mooring apparatus may comprise an electrical cable.

Alternatively or in addition, the mooring apparatus may comprise at least a part of an electrical connector, such as the electrical connector for connecting the electrical cable of the mooring apparatus to the arrangement as described above, which may be configured for releasable attachment to the buoyancy vessel. Hence, the electrical connector may be disconnected from the buoyancy vessel with the electrical cable for maintenance on the surface vessel.

Further embodiments of the second aspect of the present invention may comprise one or more features of the first aspect of the present invention.

The inventor has appreciated the feature of the length adjuster to be of wider application than hitherto described. Thus according to a third aspect of the present invention there is provided water borne apparatus comprising:
a buoyancy vessel;
a mooring arrangement configured to secure the apparatus to a fixed point, such as the seabed, the mooring apparatus comprising a pliable elongate member for coupling the apparatus to the fixed point;
a tension sensor operative to sense tension in the elongate member; and
a length adjuster operable to change a length of elongate member deployed in the water in dependence on an output from the tension sensor.

More specifically, the water borne apparatus may be one of: power generating apparatus; a surface vessel; and a submarine vessel.

Further embodiments of the third aspect of the present invention may comprise one or more features of the first or second aspect of the invention.

According to a fourth aspect of the present invention, there is provided a method of connecting first and second arrangements to each other in a body of water, the method comprising the steps of:
connecting first and second elongate members to each other on a surface vessel, the first elongate member being attached to a first arrangement configured to float at a surface of the body of water, the second elongate member being attached to a second arrangement in or on the body of water;
retracting the connected first and second elongate members with a retractor mounted on the first arrangement so as to draw the second arrangement towards the first arrangement by way of the first and second elongate members; and
connecting the first and second arrangements to each other when the first and second arrangements are proximate each other.

In use, the method according to the fourth aspect of the present invention enables the first and second arrangements to be connected to each other with little or no manual handling of taut elongate members, which thereby provides for an increase in safety. In addition, there may be no need for divers or remotely operated vehicles to connect the first and second arrangements to each other.

More specifically, the step of retracting the connected first and second elongate members may comprise controlling the operation of the retractor remotely from the surface vessel. Thus, the method with the exception of the step of connecting the first and second elongate members to each other on the surface vessel may be carried out remotely from the surface vessel.

Alternatively or in addition, the method may comprise moving the first and second elongate members from the surface vessel to the body of water. The first and second elongate members may be moved either by throwing the first and second elongate members overboard from the surface vessel or as a consequence of the first and second elongate members being drawn overboard by operation of the retractor.

Alternatively or in addition, the retractor may comprise a winch.

Alternatively or in addition, at least one of the first and second elongate members may comprise a cable.

Alternatively or in addition, an end of the second elongate member opposed to an end connected to the second arrangement may be connected to a buoy configured to float on the surface of the body of water. Thus the step of connecting the first and second elongate members to each other on the surface vessel may comprise moving the float from the surface of the body of water to the surface vessel before the first and second elongate members are connected.

Alternatively or in addition, the first arrangement may comprise at least one energy conversion apparatus operable to be driven by the environment.

Alternatively or in addition, the second arrangement may be permanently moored to the bed of the body of water and the second arrangement may comprise a buoyancy vessel configured to be neutrally buoyant at a location in the body of water spaced apart from the bed of the body of water.

Alternatively or in addition, the first arrangement may define a space configured to receive the second arrangement after retraction of the first and second elongate members. When the second arrangement is received in the first arrangement the first and second arrangements may be connected to each other.

Further embodiments of the fourth aspect of the present invention may comprise one or more features of any previous aspect of the present invention.

According to a further aspect of the present invention there is provided power generating apparatus comprising: a first arrangement comprising a buoyancy vessel configured to float at a surface of a body of water, the first arrangement comprising at least one energy conversion apparatus operable to be driven by the environment; and a second arrangement comprising an electrical cable, the first and second arrangements being configured for releasable attachment to each other and such that electricity is conveyed on the electrical cable in dependence upon operation of the energy conversion apparatus when the first and second arrangements are attached to each other.

Embodiments of the further aspect of the present invention may comprise one or more features of any previous aspect of the present invention.

### Brief description of the drawings

The present invention will now be described by way of example only with reference to the following drawings, of which:
Figure 1 is a perspective view showing the present invention in use;
Figure 2 is a side view showing the second arrangement of the present invention when detached from the first arrangement;
Figure 3 is a perspective view showing the present invention when about to undergo maintenance;
Figures 4A and 4B are side views, Figures 4C and 4D perspective views, Figure 4E a view from above and Figure 4F a view from underneath the second arrangement;
Figures 5A and 5B provide perspective and top views respectively of the second arrangement without the cage assembly and Figure 5C provides an exploded view of the second arrangement;
Figure 6 is a side view of the electrical and mechanical connector arrangement of the second arrangement shown in Figures 4A to 4F and Figures 5A to 5C;
Figure 7 is a detailed view of the present invention when the second arrangement is attached to the first arrangement; and
Figure 8 shows a mooring line adjusting apparatus used with the second arrangement;
Figure 9 shows steps of a method of performing maintenance on power generation apparatus;
Figures 10a to 10d illustrate a method of connecting first and second arrangements of power generating apparatus to each other; and
Figure 11 illustrates an embodiment of the first arrangement of the present invention.

### Specific description

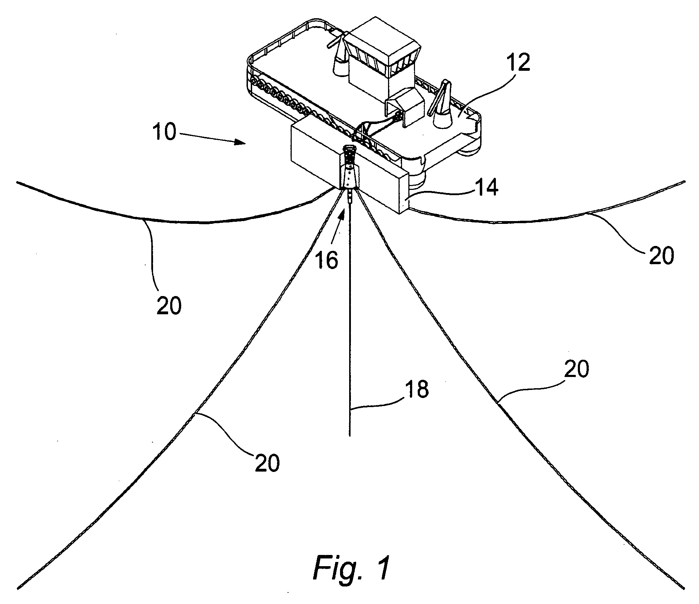

Figure 1 provides a perspective view from above of power generating apparatus 10 according to the present invention. The power generating apparatus 10 is shown moored alongside a floating maintenance platform 12, such as a Multicat vessel. The power generating apparatus 10 comprises a first arrangement 14 and a second arrangement 16, which are releasably attached to each other as will be described below in more detail. The first arrangement 14 is a water current powered generating apparatus of the kind described in WO 2006/061652 or CA 1290221. Thus, the first arrangement comprises a first buoyancy vessel which maintains the first arrangement on the surface of a body of seawater. The first arrangement also comprises rotors, which depend from the underside of the first buoyancy vessel. Water currents drive the rotors, which in turn drive an electromechanical electricity generator in the first buoyancy vessel. The electromechanical electricity generator produces a three-phase output that is electrically coupled to the second arrangement 16, as is described below. The three-phase output is carried from the second arrangement 16 by means of an electrical cable 18. Figure 1 also shows mooring lines 20, which are used to anchor the second arrangement 16 to the seabed. It should be noted that the first arrangement 14 is shown in partial section so that the disposition of the second arrangement 16 in relation to the first arrangement 14 can be appreciated.

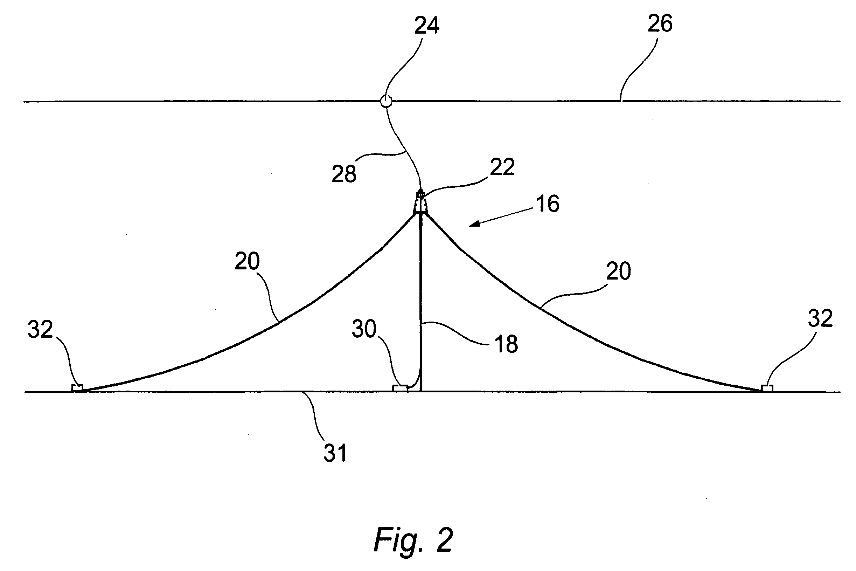

The first and second arrangements 14, 16 are detachable from each other. Figure 2 shows the second arrangement 16 after detachment from the first arrangement. The second arrangement 16 comprises a second buoyancy vessel 22 and a buoy 24, which is shown floating on the surface 26 of the body of seawater. The buoy 24 is attached to the second buoyancy vessel 22 by means of a pliable line 28. Figure 2 also shows the electrical cable 18, which extends from the second buoyancy vessel 22 to a junction box 30 located on the seabed 31. The junction box is of known form and function and is used to provide for electrical connection to other power generating apparatus and for onward conveyance of the generated three-phase electrical power. As can be seen from Figure 2, the mooring lines 20 extend from the second buoyancy vessel 22 to anchor locations 32 on the seabed 31. The second buoyancy vessel 22 is configured such that when it is detached from the first arrangement 14, the second buoyancy vessel 22 drops from the surface 26 of the body of seawater to a predetermined depth of between substantially 15 m and substantially 20 m at which the second buoyancy vessel 22 is neutrally buoyant. Thus, the second buoyancy vessel 22 presents no obstacle to surface borne sea traffic. At this stage, the buoy 24 is attached to the second buoyancy vessel 22 by a release device (not shown). When the second buoyancy vessel 22 is being recovered, e.g. for re-attachment to a first arrangement 14, the release device is acoustically actuated to release the buoy 24, which floats to the surface 26 of the body of seawater where it can be used by the surface vessel 12 to recover the submerged second buoyancy vessel 22. Thus, Figure 2 shows the second arrangement 16 when the buoy 24 has been deployed and when the second buoyancy vessel 22 is ready for recovery by the surface vessel 12.

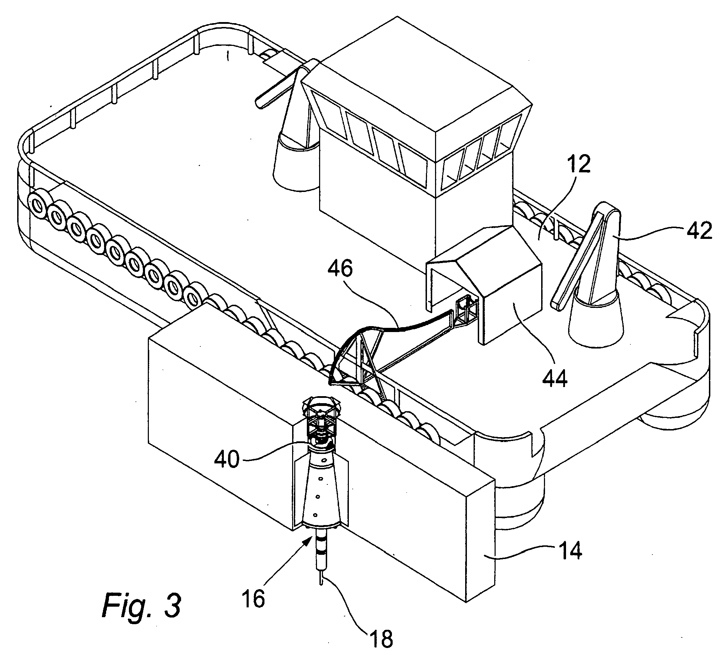

Figure 3 is a detailed perspective view of the first and second arrangements 14, 16 when moored alongside the surface vessel 12. As with Figure 1, the first arrangement 14 is shown in partial section so that the disposition of the second arrangement 16 in relation to the first arrangement 14 can be appreciated. The surface vessel 12 is used to bring the second arrangement 16 into engagement with the first arrangement 14 after recovery of the second buoyancy vessel 22 as described above with reference to Figure 2. The first arrangement 14 defines a space 40 into which the second arrangement 16 is raised, e.g. by means of a crane 42 provided on the surface vessel 12. The second arrangement 16 is held in position in the space 40 defined by the first arrangement 14 by means described in detail below. The surface vessel may then move away leaving the first and second arrangements attached to each other and operative to generate electricity. The surface vessel 12 also comprises a dry enclosure 44 and a cable guide and winch arrangement 46 for use during maintenance on the electrical cable 18 and the slip ring arrangement. During maintenance, the electrical cable 18 and the slip ring arrangement are detached from the second arrangement 16, as is described in detail below, and drawn by means of the cable guide and winch arrangement 46 into the dry enclosure 44. Thus the electrical cable and slip ring arrangement can be maintained in a dry and electrically safe environment.

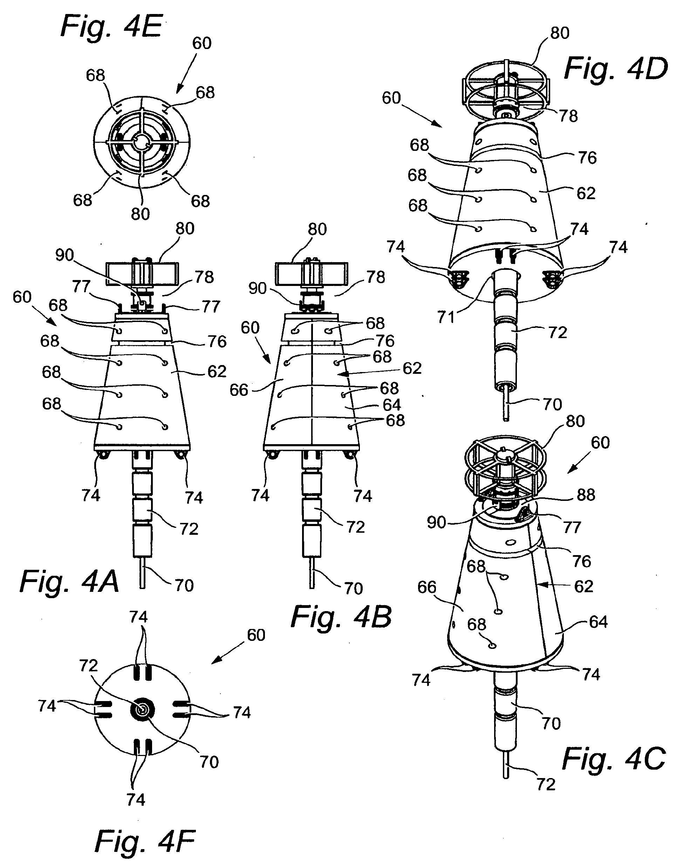

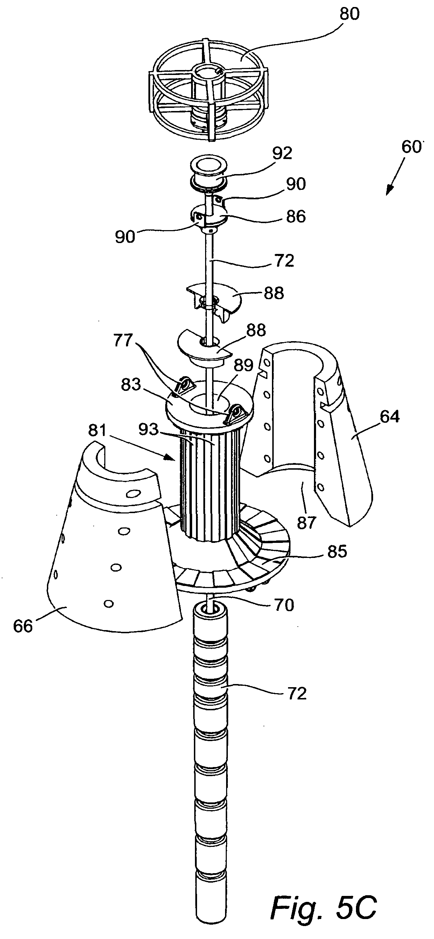

Figures 4A to 4F provide various views of the second arrangement 16, 60. Figure 4A shows a first side view of the second arrangement and Figure 4B shows a second side view when the second arrangement has been rotated through 90 degrees from the position shown in Figure 4A. Figure 4C shows a perspective view of the second arrangement 60 from one side and above and Figure 4D shows a perspective view of the second arrangement 60 from one side and below. Figures 4E and 4F show views of the second arrangement 60 from above and below respectively. As can be seen from Figures 4A to 4D, the second arrangement comprises an outer casing 62 having first and second casing components 64, 66. As will be described below with reference to Figure 5C, the outer casing 62 constitutes a buoyancy vessel. The first and second casing components 64, 66 are clamped around the buoyancy vessel by means of spaced apart pairs of cooperating bolts and nuts 68 that are operative to draw the first and second casing components together. As can be seen from Figures 4A to 4D, the outer casing is frustroconical in form. As shown in Figure 4D, the second arrangement 60 defines a bore 71, which receives the electrical cable 70. The electrical cable 70 is sheathed towards the underside of the second arrangement 60 in a bend restrictor 72 of conventional design. As shown in Figures 4D and 4F lugs 74 are provided at spaced apart locations on the underside of the outer casing 62; the lugs 74 provide for attachment of the mooring lines 20 shown in Figures 1 and 2.

The outer casing 62 defines a recess 76 that extends around an upper end of the outer casing. The recess 76 is used to provide for attachment of the first 14 and second 16, 60 arrangements, e.g. upon conclusion of the recovery operation described above with reference to Figure 2. During the recovery operation cables may be attached to recovery lugs 77 on the top of the outer casing 62 and the cables used to raise the second arrangement in the water and to move the second arrangement into the space 40 defined by the first arrangement. When the second arrangement is received in the first arrangement, the recess 76 receives edges of a pair of clamping members (not shown) mounted on the first arrangement 14. The clamping members are mounted on the first arrangement for movement between first and second dispositions. In the first disposition, the clamping members are spaced apart from each other to an extent sufficient to permit reception of the second arrangement 16, 60 in the bore 40 of the first arrangement 14. When the second arrangement is received in the bore of the first arrangement the clamping members are moved together until they are in the second disposition, in which opposing edges of the clamping member are received in the recess to thereby hold the second arrangement in the bore of the first arrangement.

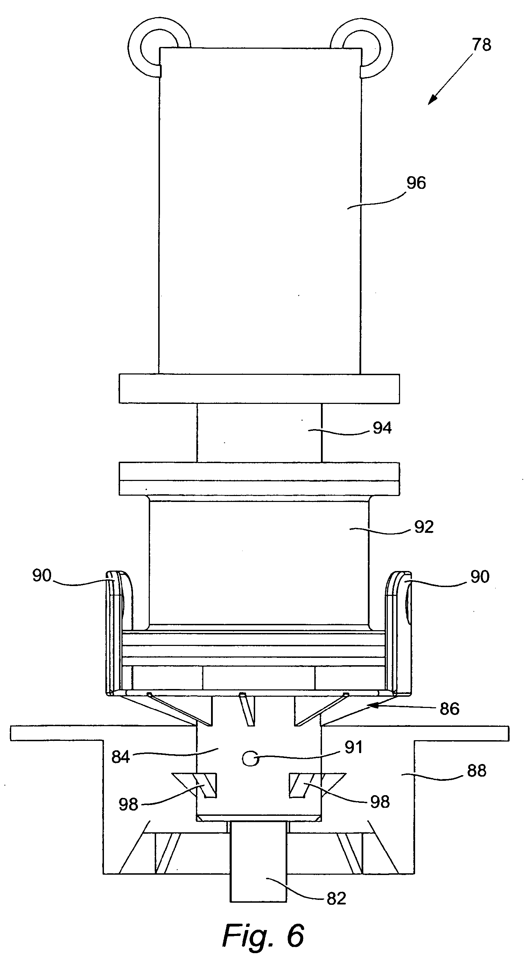

The second arrangement 60 also comprises a mechanical and electrical connector arrangement 78, which is operative to mechanically connect the electrical cable 70 to the second arrangement and to provide an electrical connection between the electrical cable 70 and the electromechanical electricity generator in the first arrangement 14. The mechanical and electrical connector arrangement 78 is described below in more detail with reference to Figure 6. A cage arrangement 80 is attached to an upper part of the mechanical and electrical connector arrangement 78. The cage arrangement defines a cylindrical footprint. The cage arrangement comprises two wide diameter hoops of substantially the same diameter that are spaced apart in the direction that the electrical cable extends with the wide diameter hoops being joined to each other by a plurality of elongate members that are spaced apart around the hoops. The cage arrangement also comprises two narrow diameter hoops of substantially the same diameter, with a first one of the narrow diameter hoops being disposed concentrically with a first one of the two wide diameter hoops and a second one of the narrow diameter hoops being disposed concentrically with a second one of the two wide diameter hoops. The narrow diameter hoops are joined to each other by a plurality of elongate members that are spaced apart around the hoops. Respective concentric wide and narrow diameter hoops are connected to each other by a plurality of spokes. Each of the narrow diameter hoops defines a bore in which the upper part of the mechanical and electrical connector arrangement is received.

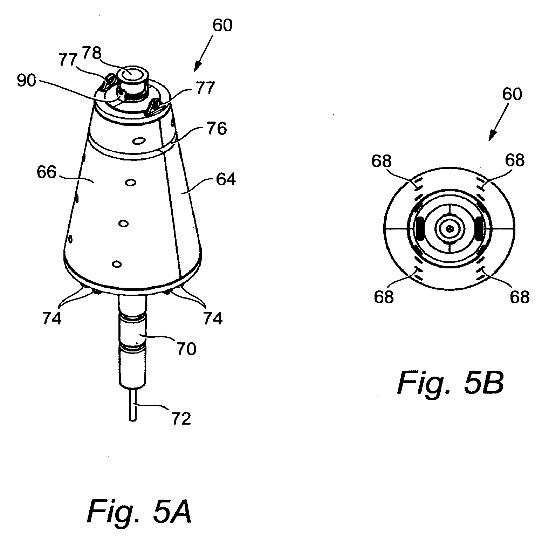

Figures 5A and 5B provide perspective and top views respectively of the second arrangement 60 without the cage assembly and the upper part of the mechanical and electrical connector arrangement. Otherwise, the second arrangement as shown in Figures 5A and 5B comprises the same components as the second arrangement as shown in Figures 4A to 4D. Figures 5A and 5B provide clear overall views of the lower part of the mechanical and electrical connector arrangement. The reader should refer to Figures 5A and 5B when reading the detailed description of the mechanical and electrical connector arrangement, which is provided below with reference to Figure 6.

Figure 5C provides an exploded view of the second arrangement 60. Components already described with reference to Figures 4A to 4F are designated with the same reference numerals. As can be appreciated from Figure 5C, each of the first and second casing components 64, 66 defines half of a cylindrical bore and has an exterior surface that defines half of a frustroconical form. Each of the first and second casing components 64, 66 is hollow and filled with air and thus the casing components make the second arrangement buoyant in water. The second arrangement 60 also comprises a spindle 81, which is enclosed by the first and second casing components 64, 66. The first and second casing components 64, 66 engage with the spindle 81 so as to provide for rotation of the first and second casing components 64, 66 about the spindle 81. A plurality of solid state bearings 93 are provided at spaced part locations on an exterior surface of the spindle 81, the solid state bearings reducing friction between and thus easing relative rotation of the casing components and the spindle. The solid state bearings are of conventional composition and form, such as a bearing composite obtainable from Tenmat of Ashburton Road West, Trafford Park, Manchester, M17 1 RU, UK. Thus, the outer casing (formed by the first and second casing components) and hence the first arrangement 14 may rotate on the tide and waves about the spindle 81 and electrical cable 18, 72, the spindle and electrical cable being held stationary in the water by the mooring lines 20. The spindle 81 has at a first end a first spindle flange 83, which sits upon an upper face of the first and second casing components when the first and second casing components are brought together to thereby prevent upward movement of the first and second casing components in relation to the spindle. The spindle also has at a second, opposing end a second spindle flange 85, which is received in a spindle flange recess 87 defined towards a lower end of the first and second casing components 64, 66 to thereby prevent downward movement of the first and second casing components in relation to the spindle. The spindle 81 defines a spindle bore 89 through which the electrical cable 70 passes.

Figure 6 provides a detailed side view of the electrical and mechanical connector arrangement 78 and components of the second arrangement nearby the electrical and mechanical connector arrangement, as shown in Figures 4A to 4F and Figures 5A to 5C. The components present in Figure 6 will now be described. The electrical cable 82 (which corresponds to the electrical cable 18, 70 shown in Figures 1 to 5C) is received in a bore defined by a cylindrical body 84 of a mechanical connector arrangement 86. The cylindrical body 84 of the mechanical connector arrangement 86 is itself received in a bore defined by a flange 88. The flange 88 is attached to the upper end of the second arrangement 60, as shown in Figures 4C and 5C. The mechanical connector arrangement 86 has a pair of release lugs 90 at opposing sides of mechanical connector arrangement; the release lugs are also shown in Figures 4A, 4C and 5C. The mechanical connector arrangement 86 is mechanically connected to an electrical connector enclosure 92. The electrical connector enclosure 92 encloses three electrical connectors (not shown), with each electrical connector providing an electrical connection for a different one of the three electrical phases. The electrical connector is of known design, such as a Loadbreak Apparatus Connector (part no. LE215B04T) from Cooper Power Systems of 1045 Hickory Street, Pewaukee, WI 53072, USA or a pre-moulded screened separable connector of Type SOC 250 TP/STP from ABB AB Kabeldon, Box 531, SE-441, 15 Alingsås, Sweden. In certain forms, the electrical connector is configured to be frangible to thereby provide for disconnection, e.g. in an emergency. The electrical connector is configured for frangibility by having part of the connection mechanism weakened such that the connection mechanism breaks when a predetermined load is exceeded. After the frangible part of the connector is broken the frangible part is remade manually before reconnection. The design of a frangible connector is within the ordinary design capabilities of the skilled person. In alternative forms, a wet mate type connector is used, such as the Series 80 connector from GISMA of D-24539, Leinestraße 25, Neumuenster. A wet mate connector is advantageous when the connection and disconnection operations are remotely controlled. The electrical connector enclosure 92 is mechanically connected to a first part 94 of a slip ring arrangement. The first part 94 of the slip ring arrangement is rotatable with respect to a second part 96 of the slip ring arrangement in accordance with known practice. The slip ring arrangement is a slip ring appropriate for marine use from Moog Components of 1213 North Main Street, Blacksburg, VA 24060-3127, USA. Thus, the second part 96 of the slip ring arrangement is rotatable in relation to the first part 94 of the slip ring arrangement and the components mentioned above that are attached to the first part 94. As can be seen from Figures 4A to 4D the cage arrangement 80 is attached to the second part 96 of the slip ring arrangement such that cage arrangement 80 rotates with the second part 96. The slip ring arrangement provides an electrical connection between the electromechanical electricity generator in the first arrangement 14 and the electrical connectors enclosed in the electrical connector enclosure 92, with the electrical connectors in turn providing an electrical connection to three phase conductors (not shown) in the electrical cable 82.

The electrical and mechanical connector arrangement 80 of Figure 6 also comprises a plurality of teeth 98 mounted in the cylindrical body 84 of the mechanical connector arrangement 86. More specifically, each tooth 98 is received in an aperture provided in the cylindrical body 84 such that it is movable through the aperture. Each tooth is movable between an extended position and a retracted position. A biasing device, such as a spring, is mechanically coupled to each tooth to bias the tooth towards the extended position. Each tooth has a triangular profile. When the tooth is in the extended position, an inclined surface of the tooth extends from an outer surface of the cylindrical body and in a direction away from the outer casing of the second arrangement and terminates in an engaging surface that extends substantially perpendicularly of the outer surface of the cylindrical body. In the extended position, the outer edges of the engaging surfaces of the teeth extend beyond an inner edge of the bore defined by the flange 88. Thus, the teeth prevent movement of the electrical cable 82 and the mechanical and electrical connector arrangement 78 in an upwards direction through the bore defined by the flange. An interior part of each tooth 98 is mechanically connected to the electrical cable 82 such that relative movement of the cable and the mechanical connector arrangement 86 causes the teeth to be withdrawn through their respective apertures into the cylindrical body 84 such that the teeth are in their retracted position. In the retracted position, the teeth are either withdrawn to the extend that the outer edges of the teeth extend no further than the outer surface of the cylindrical body 84 or to the extent that the outer edges of the teeth extend within an inner edge of the bore defined by the flange 88. Thus, when the teeth are in the retracted position the electrical cable 82 and the mechanical and electrical connector arrangement 78 can be moved in an upwards direction through the bore defined by the flange 88. When the present invention 10 is moored to the surface vessel 12, as shown in Figure 1, cables (not shown) can be fed through the cage arrangement 80 and attached to the release lugs 90. Pulling on the cables causes upward movement of the mechanical connector arrangement 86 relative to the electrical cable 82, which in turn causes movement of the teeth from the extended position to the retracted position. Further pulling on the cables causes the movement of the electrical cable 82 and mechanical and electrical connector arrangement 78 through the bore defined by the flange 88 such that the electrical cable 82 and mechanical and electrical connector arrangement 80 are separated from the second arrangement 16, 60 to allow for maintenance operations, as described above with reference to Figure 3. The cylindrical body 84 comprises at least one pin 91 extending radially from an outer surface of the cylindrical body. The pin 91 is received in a slot defined in an inner surface of the bore of the flange 88. This restricts relative rotation of the cylindrical body 84 and flange 88 whilst allowing for relative linear movement of the cylindrical body and flange.

As can be seen from 5C, the flange 88 comprises two halves, which are removably attached, e.g. by bolts, to the upper end of the second arrangement. When it is desired to remove the electrical cable, the second arrangement 16, 60 is taken on board the surface vessel 12 and the flange 88 removed. A cover plate (not shown) is fitted over the exposed electrical connection and the electrical cable is then allowed to drop down through the bore defined by the second arrangement. Thus, the electrical cable can be removed without removal of the second arrangement.

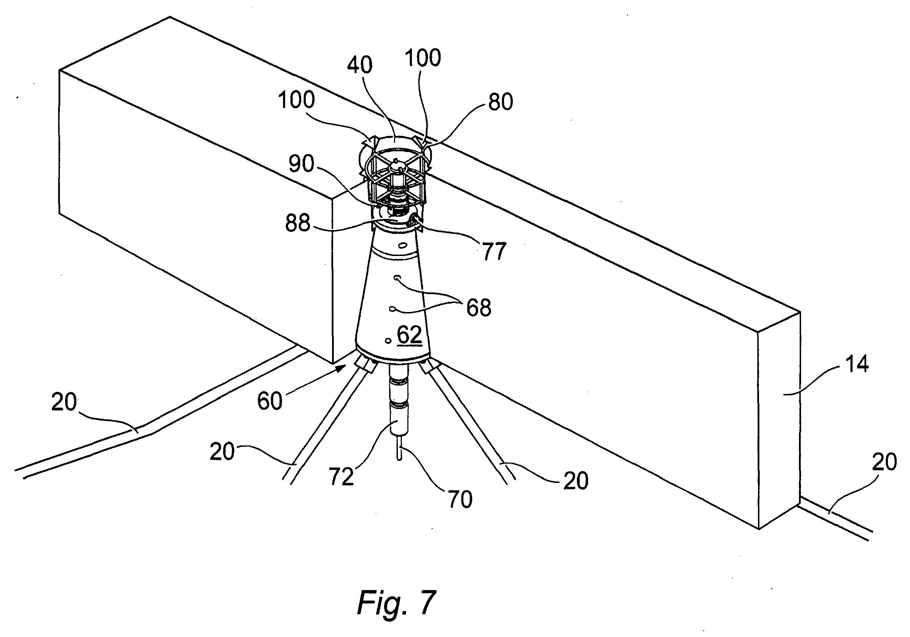

Figure 7 provides a detailed view of the present invention when the second arrangement 60 is received in the bore 40 of the first arrangement 14. Components already described with reference to Figures 4A to 4F and Figures 5A to 5C are designated in Figure 7 with the same reference numerals. As can be seen from Figure 7, the bore defines a plurality of recesses 100 spaced apart around the upper end of the bore. Portions of the cage arrangement 80 that extend beyond the outer periphery of the wide diameter hoops engage with respective recesses to thereby resist rotation of the cage arrangement with respect to the first arrangement 14. As the cage arrangement 80 is fixedly attached to the second part 96 of the slip ring arrangement the second part 96 is held such that there is no relative rotation of the second part 96 and the first arrangement 14 to thereby allow for electrical connections to be made between the electromechanical electricity generator in the first arrangement and the slip ring arrangement on the second arrangement.

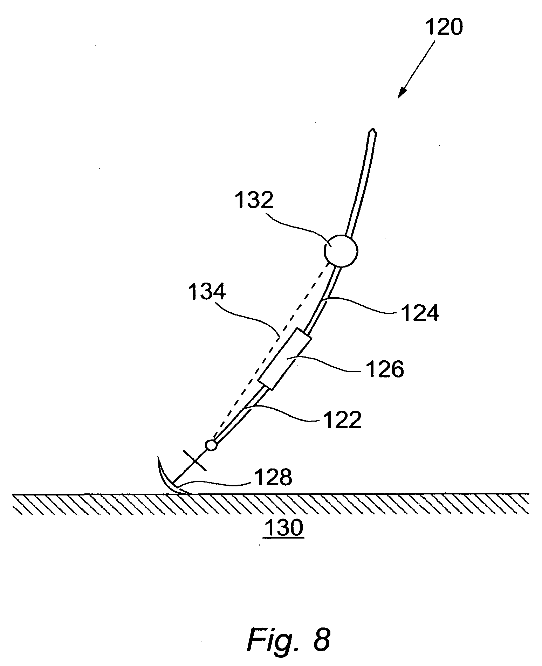

A mooring line adjusting apparatus 120, which is used with the second arrangement, is shown in Figure 8. The mooring line adjusting apparatus 120 comprises two lengths of cable 122, 124 with a load cell 126 disposed between and joining the two lengths of cable 122, 124. The load cell is of a well known kind and its inclusion in the apparatus 120 is a routine design task for the skilled person. An end of the first cable 122 (which constitutes a pliable elongate member), which opposes the end attached to the load cell 126, is attached to an anchor 128 or similar such device, which is engaged with the seabed 130. An end of the second cable 124 opposing the end attached to the load cell 126 is attached to a mooring cable 20, which is in turn attached to the second arrangement 16, 60, by way of a reel 132, which is operable to store a varying length of the second cable. The cable 122, 124 of the mooring arrangement 120 may take up the slack disposition shown in Figure 8 or the tighter disposition indicated by the straight dotted line 134 extending between the reel 132 and the anchor 128; this characteristic will be described in more detail below.

During operation, the second arrangement 16, 60 moves on the tidal stream such that the mooring cables, 122, 124 are drawn tighter as shown by the dotted line 134 in Figure 8. The drawing tighter of the cable 122, 124 affects the trim of the power generating apparatus 10 and can adversely affect its performance. As the cable 122, 124 is drawn tighter the tension increases and the increase in tension is sensed by the load cell 126. In dependence upon an output from the load cell 126 the reel 132 operates to pay out a length of cable stored on the reel 132. Conversely if the load cell 126 senses a drop in tension the reel 132 operates to take in and store a length of cable. In an un-illustrated form, each of two spaced apart lugs 74 on the underside of the outer casing 62 bear a mooring line adjusting apparatus 120 as described above, with the exception that the mooring line adjusting apparatus has no reel 132 and the cable 124 feeds through the first lug and through the second lug. The mooring line adjusting apparatus also comprises a brake mechanism that prevents movement of the cable 124 from one lug 74 to the other, with the brake being released in dependence upon an output from the load cell 126 to allow the cable to move from one lug to the other in a controlled fashion. Thus, when a length of cable 124 depending from a first lug becomes taut and a length of cable depending from a second lug becomes slack on account of a change in tidal flow the brake mechanism operates to allow movement of the cable to thereby lengthen the effective length of cable depending from the first lug and shorten the effective length of cable depending from the second lug.

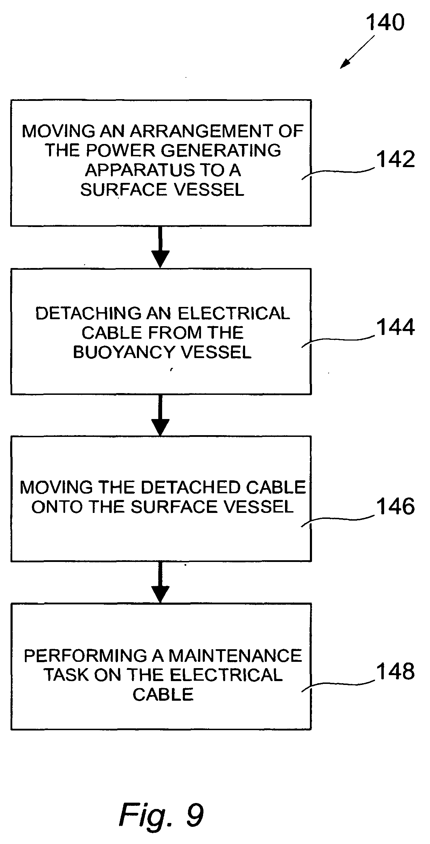

A method 140 of performing maintenance on the power generation apparatus will now be described with reference to Figures 3 and 9. As described above with reference to Figure 3, the first and second arrangements 14, 16 of the power generating apparatus are moved 142 to a surface vessel 12. The electrical cable 18 is then detached 144 from the buoyancy vessel of the second arrangement. When detached the electrical cable 18 is moved 146 by means of the cable guide and winch arrangement 46 into the dry enclosure 44 on the surface vessel. Maintenance tasks are then performed 148 on the electrical cable and associated components in the dry and electrically safe environment of the dry enclosure. When the maintenance tasks are complete, the process is reversed with the electrical cable 18 being moved from the vessel and then re-attached to the buoyancy vessel. The first and second arrangements are then re-deployed.

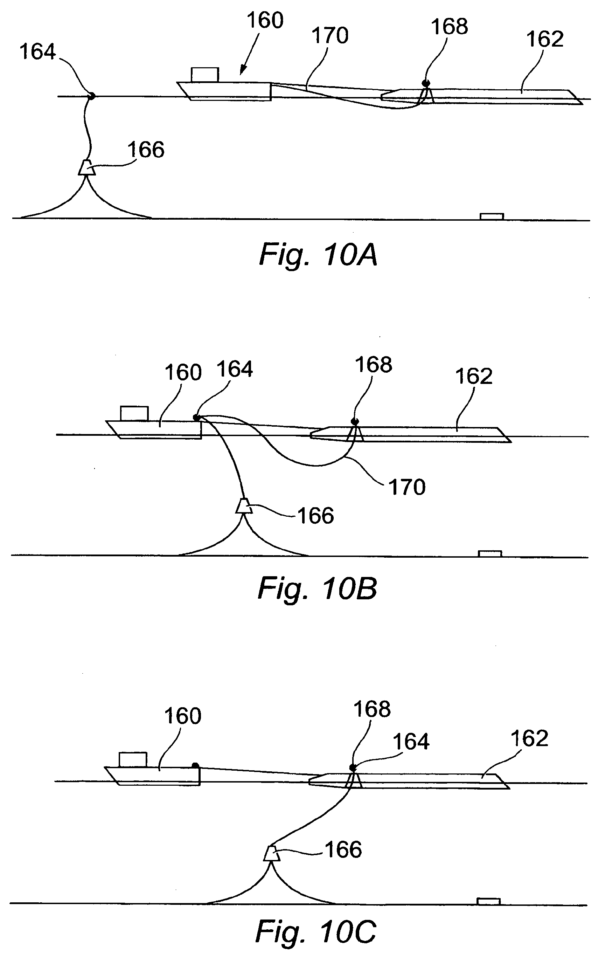

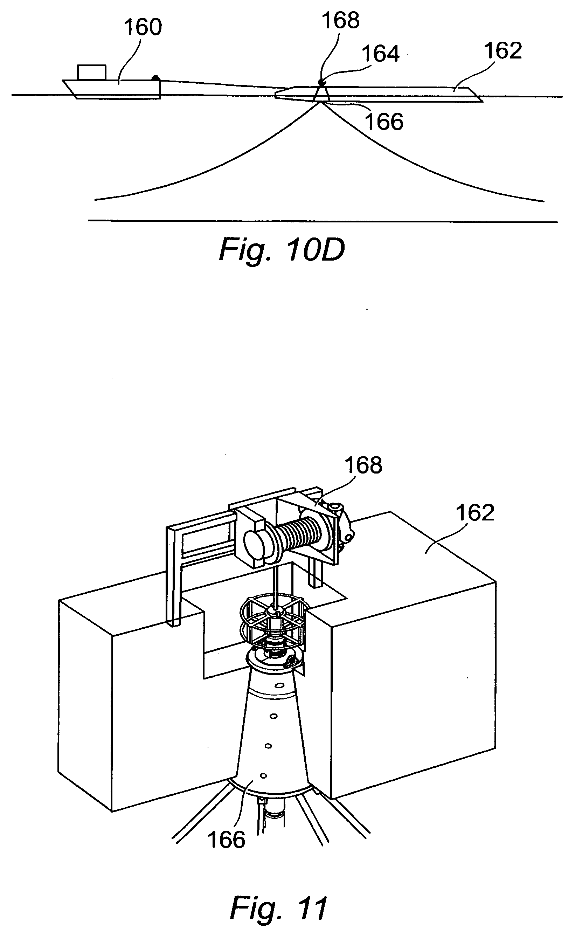

A method of connecting first and second arrangements of power generating apparatus to each other will now be described with reference to Figures 10a to 10d. This method is an alternative to the connection method described above with reference to Figure 3. As shown in Figure 10a, a surface vessel 160 tows the first arrangement 162 towards a pick-up buoy 164, which is attached by way of a rope line to the second arrangement 166. A winch 168 is mounted on the first arrangement 162 as is shown in detail in Figure 11, which is described below. An end of the winch line 170 is present on the surface vessel 160. As shown in Figure 10b, the pick-up buoy 164 is brought onto the deck of the surface vessel 160 and the winch line 170 is connected to the rope line attached to the pick-up buoy. As shown in Figure 10c, the pick-up buoy 164 and the now connected rope line and winch line 170 are thrown overboard and the winch 168 is remotely operated from the surface vessel to retract the winch line 170. Remote operation of the winch 168 is by electronic communications, e.g. Radio Frequency (RF) communications, which is within the ordinary design skills of the skilled person. As shown in Figure 10d, the winch is further operated to retract the rope line attached to the pick-up buoy 164 to thereby draw the second arrangement 166 towards the first arrangement and into the space defined in the body of the first arrangement. The first and second arrangements 162, 164 are then connected together with the clamping member as described above with reference to Figures 4A to 4F. Figure 11 shows the first and second arrangements 162, 166 connected to each other. As can be seen from Figure 11 the winch 168, which is of conventional form and function, is mounted on the first arrangement 162 above the space defined in the first arrangement and which receives the second arrangement. The winch is removably attached to the first arrangement by mechanical apparatus (not shown) such as a hydraulically actuated latch, which is controlled remotely, e.g. from the surface vessel, by RF communications. The design of a hydraulically actuated latch or the like is within the ordinary design capabilities of the skilled person. During connection of the first and second arrangements a self-aligning structure provides for proper orientation and alignment of three phase connectors on the first and second arrangements. The self-aligning structure comprises interengaging profiles on the first and second arrangements that provide for orientation and alignment as the second arrangement is drawn into the space of the first arrangement.

## Claims

1. Power generating apparatus comprising: an electrical cable 18
a first arrangement (14) comprising a first buoyancy vessel configured to float at a surface of a body of water, the first arrangement comprising at least one energy conversion apparatus operable to be driven by the environment;
a second arrangement (16) permanently moored to the bed of the body of water, the power generating apparatus being **characterised by** the second arrangement comprising; a second buoyancy vessel (22) configured to be neutrally buoyant at a location in the body of water spaced apart from the bed of the body of water; and
the first and second arrangements being configured for releasable attachment to each other and such that electricity is conveyed through the electrical cable (18) in dependence upon operation of the energy conversion apparatus when the first and second arrangements (14,16) are attached to each other.

2. Power generating apparatus according to claim 1, in which the second buoyancy vessel defines a bore extending therethrough and the electrical cable is received in the bore.

3. Power generating apparatus according to claim 1 or 2, in which the second arrangement comprises a mechanical connector and an electrical connector, the mechanical connector providing a mechanical connection between the electrical cable and the second arrangement, the electrical connector providing for an electrical connection between the first arrangement and the second arrangement.

4. Power generating apparatus according to claim 3, in which the mechanical connector and the electrical connector are configured for their connection and disconnection at different times.

5. Power generating apparatus according to any preceding claim, in which the second arrangement comprises an energy conversion apparatus electrical connector which is detachable from the second arrangement.

6. Power generating apparatus according to any preceding claim, in which the second arrangement comprises an acoustically releasable buoy configured to float on the surface of the body of water, the buoy being attached to the second buoyancy vessel by means of a pliable member.

7. Power generating apparatus according to any preceding claim, in which the first buoyancy vessel defines a space, the space being configured to receive the second arrangement when the first and second arrangements are attached to each other.

8. Power generating apparatus according to any preceding claim, in which the first and second arrangements are configured for their remote detachment, the first and second arrangements being detached by means of a release device that is actuated in dependence on an actuation signal.

9. Power generating apparatus according to any preceding claim, in which the first arrangement comprises second arrangement attachment apparatus which is operable to grip the second arrangement, the second arrangement attachment apparatus comprising a pair of members that move between a first spaced apart disposition in which they do not engage with the second arrangement and a second disposition in which they define a profile between them that engages with the second arrangement.

10. Power generating apparatus according to any preceding claim, in which the power generating apparatus comprises a mooring arrangement configured to secure the apparatus to the seabed or other such fixed point, the mooring arrangement comprising a pliable elongate member for coupling the apparatus to the seabed or other such fixed point.

11. Power generating apparatus according to claim 10, in which the mooring arrangement comprises a length adjuster operable to change a length of elongate member deployed in the water, the length adjuster comprising a device operable to lengthen or shorten an effective length of elongate member.

12. Power generating apparatus according to claim 11, in which the mooring arrangement comprises a tension sensor operative to sense tension in the elongate member and the length adjuster is operative in dependence on the output from the tension sensor.

13. Power generating apparatus according to any of claims 10 to 12, in which the mooring arrangement comprises a brake configured to prevent movement of the cable and to selectively allow movement of the cable.

14. Power generating apparatus according to claim 13 and where the mooring arrangement comprises a tension sensor, in which the brake is operative in dependence upon an output from the tension sensor.

15. Power generating apparatus according to any preceding claim, wherein the first arrangement comprises a refractor mounted thereon and a retractor elongate member, the retractor being operative to retract the retractor elongate member towards the first arrangement.

16. Power generating apparatus according to claim 15, in which the retractor is remotely operable.

17. Power generating apparatus according to claim 15 or 16, in which the retractor is removably attached to the first arrangement.

18. Power generating apparatus according to any of claims 15 to 17 and where the first buoyancy vessel defines a space for receiving the second arrangement, in which the retractor is mounted on the first arrangement such that the retractor elongate member is withdrawn through the space.

## Patentansprüche

1. Stromerzeuger, umfassend
ein Stromkabel (18)
eine erste Ausgestaltung (14), umfassend ein erstes schwimmendes Wasserfahrzeug, das so konfiguriert ist, dass es auf einer Oberfläche eines Gewässers schwimmt, wobei die erste Ausgestaltung mindestens einen Energiewandler umfasst, der durch die Umgebung angetrieben werden kann;
eine zweite Ausgestaltung (16), die dauerhaft am Boden des Gewässers vertäut ist, wobei der Stromerzeuger **dadurch gekennzeichnet ist, dass** die zweite Ausgestaltung Folgendes umfasst: ein zweites schwimmendes Wasserfahrzeug (22), das so konfiguriert ist, dass
es neutral an einer Stelle des Gewässers schwimmt, die nicht dem Boden des Gewässers entspricht; und
wobei die erste und die zweite Ausgestaltung für eine lösbare Befestigung konfiguriert sind: zueinander und so, dass der Strom durch das Stromkabel (18) geleitet wird, je nach Betrieb des Energiewandlers, wenn die erste und die zweite Ausgestaltung (14, 16) miteinander verbunden sind.

2. Stromerzeuger nach Anspruch 1, bei dem das zweite schwimmende Wasserfahrzeug eine durchgehende Bohrung definiert und das Stromkabel in der Bohrung aufgenommen wird.

3. Stromerzeuger nach Anspruch 1 oder 2, bei dem die zweite Ausgestaltung einen mechanischen Verbinder und einen Stecker umfasst, wobei der mechanische Verbinder eine mechanische Verbindung zwischen dem Stromkabel und der zweiten Ausgestaltung herstellt, der Stecker eine elektrische Verbindung zwischen der ersten Ausgestaltung und der zweiten Ausgestaltung herstellt.

4. Stromerzeuger nach Anspruch 3, bei dem der mechanische Verbinder und der Stecker so konfiguriert sind, dass sie zu unterschiedlichen Zeitpunkten verbunden und getrennt werden können.

5. Stromerzeuger nach einem der oben stehenden Ansprüche, bei dem die zweite Ausgestaltung einen Stecker für den Energiewandler umfasst, der von der zweiten Ausgestaltung getrennt werden kann.

6. Stromerzeuger nach einem der oben stehenden Ansprüche, bei dem die zweite Ausgestaltung eine akustisch lösbare Tonne umfasst, die so konfiguriert ist, dass sie auf der Oberfläche des Gewässers schwimmt, wobei die Tonne mit Hilfe eines biegsamen Bauteils am zweiten schwimmenden Wasserfahrzeug befestigt ist.

7. Stromerzeuger nach einem der oben stehenden Ansprüche, bei dem das erste schwimmende Wasserfahrzeug einen Raum definiert, wobei der Raum so konfiguriert ist, dass dieser die zweite Ausgestaltung aufnehmen kann, wenn die erste und die zweite Ausgestaltung miteinander verbunden sind.

8. Stromerzeuger nach einem der oben stehenden Ansprüche, bei dem die erste und die zweite Ausgestaltung so konfiguriert sind, dass sie aus der Ferne getrennt werden können, wobei die erste und die zweite Ausgestaltung über einer Freigabevorrichtung getrennt werden, die in Abhängigkeit von einem Ansteuerungssignal angesteuert wird.

9. Stromerzeuger nach einem der oben stehenden Ansprüche, bei dem die erste Ausgestaltung die Befestigungsvorrichtung für die zweite Ausgestaltung umfasst, mit der die zweite Ausgestaltung umfasst werden kann, wobei die Befestigungsvorrichtung für die zweite Ausgestaltung zwei Bauteile umfasst, die sich zwischen einer ersten getrennten Position, in der keine Verbindung mit der zweiten Ausgestaltung erfolgt, und einer zweiten Position bewegen, in der sie ein Profil dazwischen ausbilden, das in die zweite Ausgestaltung einrastet.

10. Stromerzeuger nach einem der oben stehenden Ansprüche, bei dem der Stromerzeuger eine Verankerungseinrichtung umfasst, die so konfiguriert ist, dass sie den Erzeuger am Meeresboden oder einem anderen festen Punkt sichert, wobei die Verankerungseinrichtung ein biegsames längliches Bauteil umfasst, um den Erzeuger mit dem Meeresboden oder einem anderen festen Punkt zu verbinden.

11. Stromerzeuger nach Anspruch 10, bei dem die Verankerungseinrichtung eine Vorrichtung zur Einstellung der Länge umfasst, mit der eine Länge des im Wasser eingesetzten länglichen Bauteils verändert werden kann, wobei die Vorrichtung zur Einstellung der Länge ein Gerät umfasst, mit dem eine effektive Länge des länglichen Bauteils verlängert oder verkürzt werden kann.

12. Stromerzeuger nach Anspruch 11, bei dem die Verankerungseinrichtung einen Spannungssensor umfasst, mit dem die Spannung im länglichen Bauteil gemessen werden kann, und die Vorrichtung zur Einstellung der Länge in Abhängigkeit von der Ausgabe des Spannungssensors arbeitet.

13. Stromerzeuger nach einem der Ansprüche 10 bis 12, bei dem die Verankerungseinrichtung eine Bremse umfasst, die so konfiguriert ist, dass sie jedwede Bewegung des Kabels verhindert bzw. eine Bewegung des Kabels selektiv erlaubt.

14. Stromerzeuger nach Anspruch 13, bei dem die Verankerungseinrichtung einen Spannungssensor umfasst, bei dem die Bremse in Abhängigkeit von der Ausgabe des Spannungssensors arbeitet.

15. Stromerzeuger nach einem der oben stehenden Ansprüche, bei dem die erste Ausgestaltung einen daran befestigten Retraktor und ein längliches Retraktorbauteil umfasst, wobei mit dem Retraktor das längliche Retraktorbauteil in Richtung der ersten Ausgestaltung eingefahren werden kann.

16. Stromerzeuger nach Anspruch 15, bei dem der Retraktor aus der Ferne bedient werden kann.

17. Stromerzeuger nach Anspruch 15 oder 16, bei dem der Retraktor abnehmbar an der ersten Ausgestaltung befestigt ist.

18. Stromerzeuger nach einem der Ansprüche 15 bis 17, bei dem das erste schwimmende Wasserfahrzeug einen Raum zur Aufnahme der zweiten Ausgestaltung definiert, bei dem der Retraktor so an der ersten Ausgestaltung befestigt ist, dass das längliche Retraktorbauteil durch den Raum eingefahren wird.

## Revendications

1. Un appareil de production d'énergie électrique comprenant :
un câble électrique (18)
un premier agencement (14) composé d'un premier récipient flottant configuré pour flotter sur la surface d'un plan d'eau, le premier agencement comprenant au moins un appareil de conversion de l'énergie actionnable pour être entraîné par le milieu ;
un deuxième agencement (16) amarré en permanence au fond du plan d'eau, l'appareil de production d'énergie électrique étant **caractérisé par le fait que** le deuxième agencement comprend : un deuxième récipient flottant (22) configuré pour :
être à flottage neutre en un certain emplacement dans le plan d'eau, espacé du fond du plan d'eau ; et
les premier et deuxième agencements étant configurés pour être attachés de façon amovible l'un à l'autre, et de sorte que l'électricité soit amenée par le câble électrique (18) moyennant l'utilisation de l'appareil convertisseur d'énergie lorsque les premier et deuxième agencements (14, 16) sont attachés l'un à l'autre.

2. Un appareil de production d'énergie électrique selon la revendication 1, le deuxième récipient flottant définissant un alésage le traversant, et le câble électrique passant dans l'alésage.

3. Un appareil de production d'énergie électrique selon la revendication 1 ou 2, le deuxième agencement comprenant un connecteur mécanique et un connecteur électrique, le connecteur mécanique assurant une connexion mécanique entre le câble électrique et le deuxième agencement, le connecteur électrique assurant une connexion électrique entre le premier agencement et le deuxième agencement.

4. Un appareil de production d'énergie électrique selon la revendication 3, le connecteur mécanique et le connecteur électrique étant configurés pour assurer leur connexion et leur déconnexion à différents moments.

5. Un appareil de production d'énergie électrique selon une quelconque des revendications précédentes, le deuxième agencement comprenant un connecteur électrique pour appareil de conversion, détachable du deuxième agencement.

6. Un appareil de production d'énergie électrique selon une quelconque des revendications précédentes, le deuxième agencement comprenant une bouée acoustiquement détachable, configurée pour flotter à la surface du plan d'eau, la bouée étant fixée au deuxième récipient flottant par le biais d'un élément flexible.

7. Un appareil de production d'énergie électrique selon une quelconque des revendications précédentes, le premier récipient flottant définissant un espace, cet espace étant configuré pour recevoir le deuxième agencement lorsque les premier et deuxième agencements sont attachés l'un à l'autre.

8. Un appareil de production d'énergie électrique selon une quelconque des revendications précédentes, les premier et deuxième agencements étant configurés pour leur détachement à distance, les premier et deuxième agencements se détachant à l'aide d'un dispositif de détachement, dont l'actionnement est tributaire d'un signal d'actionnement.

9. Un appareil de production d'énergie électrique selon une quelconque des revendications précédentes, le premier agencement comprenant un appareil de fixation du deuxième agencement, actionnable pour saisir le deuxième agencement, l'appareil de fixation du deuxième agencement comprenant une paire d'éléments se déplaçant entre un premier agencement espacé, dans le cadre duquel ils ne s'engagent pas avec le premier agencement, et un deuxième agencement, dans le cadre duquel ils définissent entre eux un profil qui s'engage avec le deuxième agencement.

10. Un appareil de production d'énergie électrique selon une quelconque des revendications précédentes, l'appareil de production d'énergie électrique comprenant un dispositif d'amarrage configuré pour immobiliser l'appareil sur le fond marin, ou autre point fixe du même genre, le dispositif d'amarrage comprenant un élément allongé pliable permettant l'accouplement de l'appareil avec le fond marin, ou tout autre point fixe du même genre.

11. Un appareil de production d'énergie électrique selon la revendication 10, le dispositif d'amarrage comprenant un régulateur de longueur utilisable pour modifier une longueur de l'élément allongé déployé dans l'eau, le régulateur de longueur comprenant un dispositif permettant d'augmenter ou réduire une longueur efficace de l'élément allongé.

12. Un appareil de production d'énergie électrique selon la revendication 11, le dispositif d'amarrage comprenant un détecteur de tension assurant la détection de la tension dans l'élément allongé, et l'actionnement du régulateur de longueur étant tributaire de la sortie du détecteur de tension.

13. Un appareil de production d'énergie électrique selon une quelconque des revendications 10 à 12, le dispositif d'amarrage comprenant un frein configuré pour empêcher le mouvement du câble, et permettre de façon sélective le mouvement du câble.

14. Un appareil de production d'énergie électrique selon la revendication 13, le dispositif d'amarrage comprenant un détecteur de tension, dans lequel le déclenchement du frein est tributaire d'une sortie du détecteur de tension.

15. Un appareil de production d'énergie électrique selon une quelconque des revendications précédentes, le premier agencement comprenant un rétracteur monté sur celui-ci, et un élément allongé de rétracteur, le rétracteur pouvant être utilisé pour rétracter l'élément allongé de rétracteur en direction du premier agencement.

16. Un appareil de production d'énergie électrique selon la revendication 15, le rétracteur étant actionnable à distance.

17. Un appareil de production d'énergie électrique selon la revendication 15 ou 16, le rétracteur étant fixé de façon amovible au premier agencement.

18. Un appareil de production d'énergie électrique selon une quelconque des revendications 15 à 17, le premier récipient flottant finissant un espace pour recevoir le deuxième agencement, dans lequel le rétracteur est monté sur le premier agencement, de façon à extraire l'élément allongé de rétracteur par l'espace.
